# EUROPÄISCHE PATENTANMELDUNG

(11) **EP 4 052 833 A1**
(43) Veröffentlichungstag der Anmeldung: **07.09.2022**
(21) Anmeldenummer: 21160511.8
(22) Anmeldetag: 03.03.2021
(51) Int. Cl.: B23K 9/16, B23K 9/32, B08B 9/032

(54) **SCHUTZGASSCHLAUCH ZUR FÜHRUNG EINES SCHUTZGASES FÜR EINEN SCHWEISSPROZESS UND VERFAHREN ZUM SPÜLEN EINES SOLCHEN SCHUTZGASSCHLAUCHS**

(71) Anmelder: FRONIUS INTERNATIONAL GmbH, 4643 Pettenbach (AT)
(72) Erfinder: LEONHARTSBERGER, Andreas, 4643 Pettenbach (AT); SORINGAUER, Franz, 4643 Pettenbach (AT); DIETERMAYR, Bernhard, 4643 Pettenbach (AT)
(74) Vertreter: SONN Patentanwälte OG

(57) **Zusammenfassung**

Die Erfindung betrifft einen Schutzgasschlauch (1) zur Führung eines Schutzgases (G) für einen Schweißprozess, mit zumindest zwei in radialer Richtung aufeinanderfolgenden Schichten (S1, S2) aus verschiedenen Materialien (M1, M2) und ein Verfahren zum Spülen eines solchen Schutzgasschlauchs (1), wobei in bestimmten Zeitintervallen (Δtₖ) Schutzgas (G) während einer bestimmten Zeitdauer (t_{R}) durch den Schutzgasschlauch (1) geströmt wird. Erfindungsgemäß besteht zumindest eine Schicht (S1) des Schutzgasschlauchs (1) aus einem wasserdampfdiffusionshemmenden Material (M1) und zumindest eine weitere Schicht (S2) aus einem sauerstoff- und stickstoffdiffusionshemmenden Material (M2). Bei der Bestimmung des Zeitintervalls (Δtₖ) zwischen zwei Spülungen und der Zeitdauer (t_{R}) der Spülung wird die Zusammensetzung des Schutzgasschlauchs (1) aus der zumindest einen Schicht (S1) aus wasserdampfdiffusionshemmendem Material (M1) und der zumindest einen Schicht (S2) aus sauerstoff- und stickstoffdiffusionshemmendem Material (M2) berücksichtigt.

## Beschreibung

Die Erfindung betrifft einen Schutzgasschlauch zur Führung eines Schutzgases für einen Schweißprozess, mit zumindest zwei in radialer Richtung aufeinanderfolgenden Schichten aus verschiedenen Materialien.

Die Erfindung betrifft auch ein Verfahren zum Spülen eines oben erwähnten Schutzgasschlauchs, wobei in bestimmten Zeitintervallen Schutzgas während einer bestimmten Zeitdauer durch den Schutzgasschlauch geströmt wird.

Bei vielen Schweißverfahren werden Schutzgase eingesetzt, welche die Schweißelektrode, den geschmolzenen Werkstoff und die Schweißzone im Allgemeinen vor der Umgebungsluft abschirmen und vor ungewollten chemischen Reaktionen schützen. Meist wird Argon oder Helium als Schutzgas verwendet. Das Schutzgas wird über entsprechende Schutzgasschläuche von einem Gasspeicher zum Schweißbrenner geleitet. Die vorliegende Erfindung bezieht sich sowohl auf Schweißverfahren mit abschmelzender Elektrode, insbesondere Metallschutzgasschweißverfahren (MSG) mit seinen beiden Varianten des Metall-Inertgasschweißverfahrens (MIG) mit inerten Gasen und des Metall-Aktivgasschweißverfahrens (MAG) mit reaktionsfreudigen Gasen, als auch Schweißverfahren mit nichtabschmelzender Elektrode, insbesondere das Wolframinertgasschweißverfahren (WIG).

Schutzgasschläuche sind derzeit in verschiedenen Materialien erhältlich, wobei vorzugsweise auf die Kosten, die Verarbeitbarkeit und teilweise auch auf das Diffusionsverhalten von Wasserdampf H₂O geachtet wird. Wenn Wasserdampf über die Wand des Schutzgasschlauchs in das relativ trockene Schutzgas eindringt, wird dieser im Lichtbogen in Wasserstoff und Sauerstoff gespaltet, was zur Reduktion der Schweißqualität führen kann. Insbesondere beim Verschweißen von Aluminium führt der Einschluss von Wasserdampf (aus dem Schutzgas) in der Schweißnaht zu Wasserstoffporen, welche das Gefüge schwächen und die Schweißqualität reduzieren. Dieses Problem tritt besonders bei hoher Luftfeuchtigkeit in der Umgebungsluft und relativ langen Schutzgasschläuchen auf.

Materialien, wie Polytetrafluorethylen (PTFE), Polyethylen (PE), Polyvinylidenchlorid (PVDC) oder Polyvinylidenfluorid (PVDF) bieten diesbezüglich eine sehr gute Barriere und verhindern ein Eindringen von Wasser, über Diffusion, nahezu vollständig. Bei höheren Anforderungen kann auf Metallverrohrungen zurückgegriffen werden, welche aber den enormen Nachteil der mangelnden Flexibilität und der hohen Material- und Herstellungskosten haben. PTFE, PVDF, PVDC und PE sind relativ schwierig zu verarbeiten und lassen sich auf Grund der geringen Oberflächenenergien nur sehr schwer verkleben. Ein weiterer Nachteil von PTFE und PE ist der niedrige Diffusionswiderstand gegenüber Sauerstoff O₂ und Stickstoff N₂. Beim Schweißen von Aluminium-Werkstoffen führt dies bis zu gewissen tolerierbaren Grenzen hauptsächlich am Beginn zu optischen Problemen der Schweißnaht, da nach geringer Vorströmzeit des Schutzgases der eindiffundierte Sauerstoff und Stickstoff ausgeblasen wird. Bei relativ langen Schutzgasschläuchen, längeren Pausen zwischen den Schweißvorgängen und geringen Vorströmzeiten kann der eindiffundierte Sauerstoff zu Legierungsabbränden und der Stickstoff beim Schweißen von Stahlwerkstoffen zu Porenbildung am Beginn der Schweißung führen. Ferner können sich durch erhöhte Stickstoffkonzentration im Schutzgas Nitride im Schweißgut bilden. Beim Schweißen von Aluminium können sich bei erhöhter Wasserdampfkonzentration im Schutzgas wasserstoffinduzierte Poren bilden.

Beispielsweise ist aus der EP 1 694 460 B1 ein Schutzgasschlauch aus einem Elastomer bekannt geworden, der sowohl flexibel ist als auch eine Barriere gegen einen Eintritt von Sauerstoff bildet.

Die US 2018/133829 A1 beschreibt einen Schutzgasschlauch, der aus einem speziellen helixförmigen Band besteht, um die notwendige Flexibilität zu erzielen. Als Materialien werden Metalle, wie zum Beispiel verzinkter Stahl, aber auch Kunststoff genannt.

Materialien, welche sowohl gegen Sauerstoff und Stickstoff als auch gegen Wasserdampf diffusionsdicht bzw. diffusionshemmend sind, sind aufgrund ihrer Steifigkeit und bzw. oder mangelnden Temperaturbeständigkeit für die Verwendung bei Schutzgasschläuchen im Schweißbereich nicht geeignet und daher nicht verfügbar.

Die Aufgabe der vorliegenden Erfindung besteht darin, das im Schutzgasschlauch strömende Schutzgas möglichst gut vor einem Eindringen und Mischen mit Umgebungsluft, insbesondere vor den in der Umgebungsluft enthaltenen chemischen Verbindungen, wie Stickstoff, Sauerstoff und Wasserdampf, zu schützen, sodass eine Spülung des Schutzgasschlauchs möglichst selten erforderlich ist. Andererseits soll der Schutzgasschlauch möglichst kostengünstig herstellbar sein, möglichst leicht verarbeitbar sein und dennoch eine hohe Flexibilität aufweisen. Nachteile bekannter Schutzgasschläuche oder Verfahren zum Spülen solcher Schutzgasschläuche sollen vermieden oder zumindest reduziert werden.

Gelöst wird die Aufgabe durch einen oben genannten Schutzgasschlauch, bei dem zumindest eine Schicht aus einem wasserdampfdiffusionshemmenden Material und zumindest eine weitere Schicht aus einem sauerstoff- und stickstoffdiffusionshemmenden Material besteht. Durch die Trennung der Bedingungen der Erzielung einer möglichst guten Wasserdampfdiffusionsdichtheit und einer möglichst guten Dichtheit gegenüber Sauerstoff und Stickstoff, können verschiedene Materialien, welche jeweils eine dieser Bedingungen erfüllen, verwendet werden, welche gegenüber Materialien, die alle Bedingungen erfüllen, kostengünstiger aber auch leichter verarbeitbar sind. Durch die Auswahl geeigneter Materialien können die einzelnen Schichtdicken dieser Materialien sehr gering gehalten werden und somit kann ein Schutzgasschlauch geschaffen werden, der optimale Eigenschaften hinsichtlich der Dichtheit gegenüber Wasser bzw. Wasserdampf, Sauerstoff und Stickstoff aufweist und gleichzeitig möglichst dünnwandig und somit kostengünstig und flexibel sein kann. Die Schichten können direkt aufeinanderfolgend angeordnet sein oder auch indirekt aufeinanderfolgend, wobei Zwischenlagen beispielsweise aus einem Verstärkungsgewebe, Klebeschichten oder auch andere geeignete Beschichtungen vorgesehen sein können.

Vorzugsweise weist das wasserdampfdiffusionshemmende Material der zumindest einen Schicht des Schutzgasschlauchs einen Durchlässigkeitskoeffizienten von maximal 10⁻¹³ mol m⁻¹Pa⁻¹s⁻¹ auf. Derartige Eigenschaften haben sich für ein Material zum Aufbau eines Schutzgasschlauchs als geeignet herausgestellt. Die Messung der Durchlässigkeitskoeffizienten verschiedener folienförmiger Materialien wird beispielsweise von Kajetan Müller et al. in "Schneller zum Ergebnis" beschrieben (Kunststoffe, 7/2011, pp. 75-80 in deutscher Sprache bzw. Kunststoffe international, 7/2011, pp 62-67 in englischer Sprache).

Idealerweise weist das sauerstoff- und stickstoffdiffusionshemmende Material der zumindest einen weiteren Schicht des Schutzgasschlauchs einen Durchlässigkeitskoeffizienten von maximal 10⁻¹⁷ mol m⁻¹Pa⁻¹s⁻¹ auf. Auch diese Werte für eine Barriere gegenüber Sauerstoff und Stickstoff sind für die Anwendung bei einem Schutzgasschlauch ideal.

Geeignete Materialien für die zumindest eine Schicht aus wasserdampfdiffusionshemmendem Material sind insbesondere Polyethylen (PE) aber auch Polypropylen (PP), Ethylen-Vinylalkohol-Copolymer (EVOH), Polyvinylidenchlorid (PVDC), Polyvinylidenfluorid (PVDF) oder Polytetrafluorethylen (PTFE). Insbesondere Polyethylen ist auch sehr kostengünstig, leicht zu verarbeiten und bietet relativ hohe Elastizität. Ethylen-Vinylalkohol-Copolymer hingegen bietet zwar eine besonders gute Dichtheit gegenüber Sauerstoff und Stickstoff, ist aber aufgrund seiner mangelnden Bruchdehnung jedoch wesentlich schwerer zu verarbeiten und kann zur Erzielung einer gewissen Flexibilität des Schutzgasschlauchs in nur sehr geringen Dicken eingesetzt werden. Bei der Auswahl der Materialien wird neben den Diffusionseigenschaften auch auf die Verarbeitbarkeit (Pressung, Klebung, etc.) und mechanische Eigenschaften (beispielsweise den Berstdruck), Temperaturbeständigkeit, Glühdrahtbeständigkeit, etc. geachtet.

Geeignete Materialien für die zumindest eine Schicht aus sauerstoff- und stickstoffdiffusionshemmendem Material sind insbesondere Polyamid (PA), Polyvinylidenchlorid (PVDC) oder auch Ethylen-Vinylalkohol-Copolymer (EVOH). Polyamid ist relativ billig, gut verarbeitbar und weist eine besonders gute Dichtheit gegenüber Sauerstoff und Stickstoff auf. Die Herstellung des Schutzgasschlauchs erfolgt vorzugsweise im Extrusionsverfahren.

Die Dicke der zumindest einen Schicht aus wasserdampfdiffusionshemmendem Material und die Dicke der zumindest einen Schicht aus sauerstoff- und stickstoffdiffusionshemmendem Material beträgt vorzugsweise jeweils zwischen 0,05 mm und 2 mm. Durch die Verwendung zumindest zweier Schichten aus zumindest zwei unterschiedlichen Materialien, welche jeweils für eine bestimmte Eigenschaft besonders geeignet ist, kann die Gesamtdicke sehr gering gehalten werden, wodurch auch Materialkosten eingespart werden können.

Gemäß einem weiteren Merkmal der Erfindung kann der Schutzgasschlauch zumindest eine dritte Schicht aus einem dritten Material, vorzugsweise aus Ethylen-Vinylalkohol-Copolymer (EVOH) oder Polyvinylidenchlorid (PVDC), aufweisen. Die Dicke dieser zumindest einen dritten Schicht aus einem dritten Material kann sehr gering sein und beispielsweise zwischen 0,05 mm und 0,5 mm betragen. Die zumindest eine dritte Schicht ist vorzugsweise innen im Schutzgasschlauch angeordnet.

Die zumindest eine Schicht aus wasserdampfdiffusionshemmendem Material und bzw. oder die zumindest eine Schicht aus sauerstoff- und stickstoffdiffusionshemmendem Material kann verstärkt sein, beispielsweise mit einem Gewebe aus Nylon, Glasfaser oder dgl. Durch eine derartige Verstärkungslage kann auch die im Schweißbereich geforderte Glühdrahtbeständigkeit auch bei geringen Schichtdicken und Schlauchwandstärken erfüllt werden. Ferner kann ein verstärkendes Gewebe auch durch Normen und Regelungen vorgeschrieben sein. Zwischen Gasversorgung und Gasventil sollte jedenfalls ein verstärkendes Gewebe vorgesehen sein, um die geforderte Glühdrahtbeständigkeit zu gewährleisten.

Vorzugsweise ist die zumindest eine Schicht aus wasserdampfdiffusionshemmendem Material innen und die zumindest eine Schicht aus sauerstoff- und stickstoffdiffusionshemmendem Material außen angeordnet. Dadurch wird wirkungsvoll der Eintritt von Wasserdampf in das Innere des Schutzgasschlauchs verhindert.

Über einen Strömungssensor kann die Strömung des Schutzgases bestimmt werden. Über einen solchen, vorzugsweise am versorgungsseitigen Ende des Schutzgasschlauchs platzierten, Sensor können Leckagen des Gasführungssystems festgestellt werden.

Gemäß einem weiteren Merkmal der Erfindung kann der Schutzgasschlauch aus zumindest zwei Teillängen bestehen, wobei entlang der ersten Teillänge die zumindest eine Schicht aus wasserdampfdiffusionshemmendem Material außen und die zumindest eine Schicht aus sauerstoff- und stickstoffdiffusionshemmendem Material innen angeordnet ist und entlang der zweiten Teillänge die zumindest eine Schicht aus wasserdampfdiffusionshemmendem Material innen und die zumindest eine Schicht aus sauerstoff- und stickstoffdiffusionshemmendem Material außen angeordnet ist. Je nachdem, wo das jeweilige Teilstück des Schutzgasschlauchs angeordnet ist, kann dessen Aufbau geeignet gestaltet werden. Bei höherem Druck des Schutzgases kann beispielsweise eine Verstärkungslage im Schutzgasschlauch vorgesehen werden, wohingegen in jenen Teilen des Schutzgasschlauchs, welche in der Nähe der Schweißstelle angeordnet sind, temperaturbeständigere Materialien an der Außenseite angeordnet werden können.

Gelöst wird die erfindungsgemäße Aufgabe auch durch ein oben erwähntes Verfahren zum Spülen eines Schutzgasschlauchs, wobei das Zeitintervall zwischen zwei Spülungen und die Zeitdauer der Spülung in Abhängigkeit der Zusammensetzung der zumindest einen Schicht aus wasserdampfdiffusionshemmendem Material und der zumindest einen Schicht aus sauerstoff- und stickstoffdiffusionshemmendem Material des Schutzgasschlauchs bestimmt werden. Erfindungsgemäß ist daher vorgesehen, dass die Spülintervalle und die Spüldauer in Abhängigkeit des verwendeten Schutzgasschlauchs gewählt werden. Wenn der Aufbau des Schutzgasschlauchs bekannt ist, kann das Diffusionsverhalten anhand von Erfahrungswerten oder Messwerten abgeschätzt werden und aufgrund dessen die idealen Werte für das Intervall und die Dauer der Spülung des Schutzgasschlauchs bestimmt werden. Im Gegensatz zu herkömmlichen Verfahren, bei welchen die Spülung routinemäßig sehr häufig vorgenommen wird, kann die Notwendigkeit der Spülung an die jeweiligen Gegebenheiten angepasst werden. Dadurch kann Zeit und Schutzgas gespart werden.

Dabei können das Zeitintervall zwischen zwei Spülungen und die Zeitdauer der Spülung mit einem Algorithmus aus der Zusammensetzung der zumindest einen Schicht aus wasserdampfdiffusionshemmendem Material und der zumindest einen Schicht aus sauerstoff- und stickstoffdiffusionshemmendem Material des Schutzgasschlauchs berechnet werden. Durch einen geeigneten Algorithmus können bei Eingabe des Aufbaus und der Materialien des Schutzgasschlauchs das ideale Zeitintervall und die ideale Dauer der Spülungen berechnet werden. Das bedeutet, dass die Anreicherung von Stickstoff und/oder Sauerstoff und/oder Wasserdampf im Schutzgasschlauch über die Zeit bestimmt bzw. berechnet werden und für weitere Aktionen jeweils einzeln betrachtet werden können.

Alternativ zu einer solchen Berechnung können das Zeitintervall zwischen zwei Spülungen und die Zeitdauer der Spülung aus optimalen Zeitintervallen und optimalen Zeitdauern in Abhängigkeit der Zusammensetzung der zumindest einen Schicht aus wasserdampfdiffusionshemmendem Material und der zumindest einen Schicht aus sauerstoff- und stickstoffdiffusionshemmendem Material des Schutzgasschlauchs aus einer Datenbank ausgewählt werden. Die Datenbank oder der Speicher enthält also die idealen Werte für die Zeitintervalle zwischen zwei Spülungen und die Zeitdauer einer Spülung in Abhängigkeit des Aufbaus des Schutzgasschlauchs.

Bei der Bestimmung des Zeitintervalls zwischen zwei Spülungen und der Zeitdauer der Spülung können weitere eingegebene Daten des Schweißprozesses berücksichtigt werden. Derartige Daten können beispielsweise das Material eines zu verschweißenden Werkstücks, das Material eines verwendeten Schweißzusatzes, Umgebungsparameter, wie die Umgebungstemperatur oder die Umgebungsluftfeuchtigkeit, die Eigenschaften des Schutzgasschlauchs, wie beispielsweise die Länge, der Durchmesser oder das Volumen des Schutzgasschlauchs oder vieles mehr sein. Darüber hinaus können auch Daten berücksichtigt werden, welche die Schweißaufgabe charakterisieren. Beispielsweise können entsprechende Daten eingegeben werden, welche die Schweißqualität oder die Nahtform beschreiben. Auf diese Weise kann die Spülung noch besser an die tatsächlichen Gegebenheiten angepasst werden und nicht nur eine optimale Schweißqualität erreicht werden, sondern auch Zeit und Schutzgas gespart werden.

Bei der Bestimmung des Zeitintervalls zwischen zwei Spülungen und der Zeitdauer der Spülung wird vorzugsweise eine Plausibilitätsprüfung durchgeführt und im Falle nicht plausibler Werte auf vorgegebene Standardwerte für das Zeitintervall und die Zeitdauer zurückgegriffen. Dadurch kann verhindert werden, dass bei fehlerhaften Sensordaten oder Fehleingaben von Daten falsche Parameter für die Spülung des Schutzgasschlauchs eingestellt und angewendet werden. Darüber hinaus kann eine Information an den Schweißer ausgegeben werden, wenn die Plausibilitätsprüfung einen Fehler hervorgerufen hat, sodass dieser auf einen möglichen Fehler hingewiesen wird.

Bei der Bestimmung des Zeitintervalls zwischen zwei Spülungen und der Zeitdauer der Spülung kann auch die Menge des Schutzgases berücksichtigt werden. Beispielsweise kann zu Zeiten, während denen eine zentrale Strom- und Gasversorgung abgeschaltet ist, beispielsweise während des Wochenendes, eine regelmäßige Spülung über eine autarke Energie- und Gasversorgung sichergestellt werden und die Restgasmenge der autarken Energie- und Gasversorgung in die Berechnung der Spülparameter mit eingebunden werden.

Die vorliegende Erfindung wird anhand der beigefügten Zeichnungen näher erläutert. Darin zeigen:
- Fig. 1: ein Blockschaltbild einer Schweißvorrichtung zur Durchführung eines Schutzgasschweißprozesses;
- Fig. 2: eine Ausführungsform eines erfindungsgemäßen Schutzgasschlauchs im Querschnitt;
- Fig. 3: eine zweite Ausführungsform eines erfindungsgemäßen Schutzgasschlauchs im Querschnitt;
- Fig. 4: eine weitere Ausführungsform eines erfindungsgemäßen Schutzgasschlauchs im Querschnitt;
- Fig. 5: eine schematische Ansicht auf einen Schutzgasschlauch;
- Fig. 6: den zeitlichen Verlauf von Spülungen des Schutzgasschlauchs;
- Fig. 7: ein Flussdiagramm zur Ermittlung eines Algorithmus zur Bestimmung der Parameter der Spülung für ein erfindungsgemäßes Verfahren zum Spülen eines Schutzgasschlauchs;
- Fig. 8: eine erste Ausführungsform einer Schweißvorrichtung zur Erzielung einer energieautarken Spülung des Schutzgasschlauchs;
- Fig. 9: eine zweite Ausführungsform einer Schweißvorrichtung zur Erzielung einer energieautarken Spülung des Schutzgasschlauchs;
- Fig. 10: eine dritte Ausführungsform einer Schweißvorrichtung zur Erzielung einer energieautarken Spülung des Schutzgasschlauchs; und
- Fig. 11: eine vierte Ausführungsform einer Schweißvorrichtung zur Erzielung einer energieautarken Spülung des Schutzgasschlauchs.

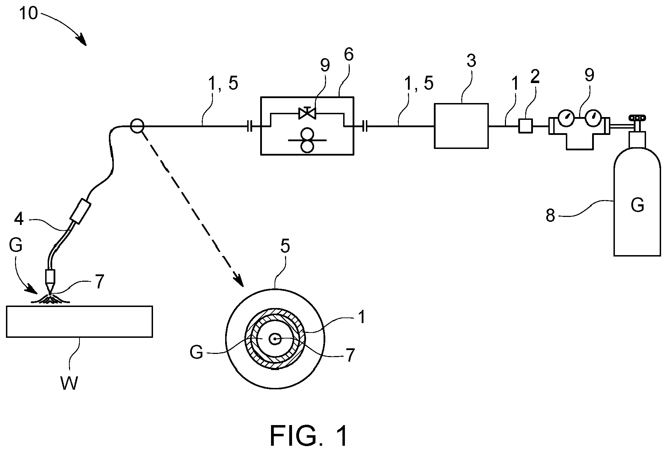

In Fig. 1 ist ein Blockschaltbild einer Schweißvorrichtung 10 zur Durchführung eines Schutzgasschweißprozesses dargestellt. Eine Schweißstromquelle 3 wird mit dem Schweißbrenner 4 über ein Schlauchpaket 5 verbunden. Ein Schweißdraht 7 kann über eine Drahtvorschubvorrichtung 6 dem Schweißbrenner 4 zugeführt werden, wobei der Schweißdraht 7 ebenfalls durch das Schlauchpaket 5 geführt wird (siehe schematischer Querschnitt durch das Schlauchpaket 5 im unteren Teil der Figur 1). Während des Schweißprozesses wird zwischen dem freien Ende des Schweißdrahts 7 oder einer nicht abschmelzenden Elektrode (nicht dargestellt) und dem Werkstück W ein Lichtbogen gezündet und der Schweißdraht 7 oder ein Zusatzmaterial (nicht dargestellt) abgeschmolzen und damit zwei Werkstücke W miteinander verbunden oder eine Schicht auf dem Werkstück W aufgetragen bzw. ein dreidimensionaler Gegenstand hergestellt (WAAM Wire-Arc Additive Manufacturing). Das Schutzgas G wird von einem Gasspeicher 8 oder Gasanschluss (nicht dargestellt) über einen gegebenenfalls vorhandenen Druckminderer 9 über einen Schutzgasschlauch 1, der üblicherweise im Schlauchpaket 5 geführt wird, zum Schweißbrenner 4 und somit zur Schweißstelle geführt. Zwischen dem Gasspeicher 8 und der Drahtvorschubvorrichtung 6 herrscht üblicherweise ein höherer Druck des Schutzgases G von beispielsweise 0,5 bis 4,5 bar. In der Drahtvorschubvorrichtung 6 kann ein weiterer Druckminderer 9 angeordnet sein, mit dem der Druck des Schutzgases G im vorderen Bereich des Schutzgasschlauchs 1 beispielsweise auf 0,1 bis 1 bar reduziert werden kann. Je nach Anwendung weisen die Schlauchpakete 5 und die Schutzgasschläuche 1 Längen von 1 bis 8 m im vorderen Bereich und zwischen 3 und 50 m im hinteren Bereich auf. Übliche Innendurchmesser der Schutzgasschläuche 1 bewegen sich im Bereich von 3 bis 4 mm im vorderen Bereich und mindestens 5 mm im hinteren Bereich.

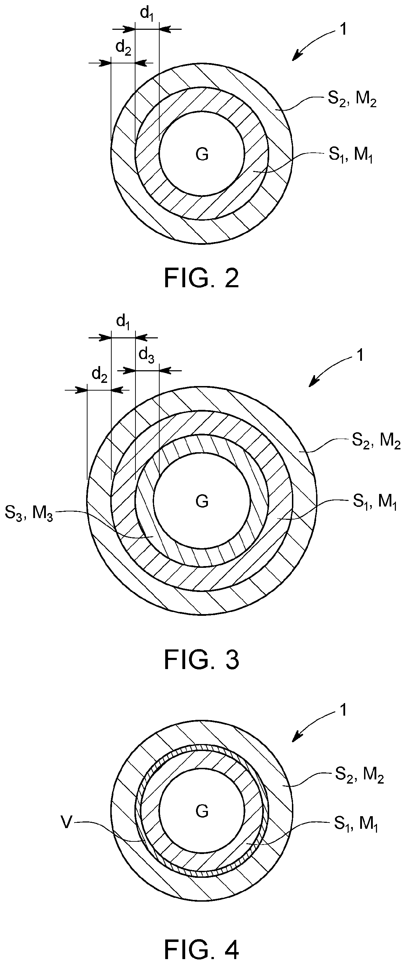

Fig. 2 zeigt eine Ausführungsform eines erfindungsgemäßen Schutzgasschlauchs 1 zur Führung eines Schutzgases G im Querschnitt. Der Schutzgasschlauch 1 besitzt zwei in radialer Richtung aufeinanderfolgende Schichten S1 und S2 aus verschiedenen Materialien M1 und M2. Die eine Schicht S1, vorzugsweise die innere Schicht, besteht aus einem wasserdampfdiffusionshemmenden Material M1 und die weitere Schicht S2, vorzugsweise die äußere Schicht, aus einem sauerstoff- und stickstoffdiffusionshemmenden Material M2. Das wasserdampfdiffusionshemmende Material M1 der zumindest einen Schicht S1 weist vorzugsweise einen Durchlässigkeitskoeffizienten für Wasserdampf von maximal 10⁻¹³ mol m⁻¹Pa⁻¹s⁻¹ auf. Das sauerstoff- und stickstoffdiffusionshemmende Material M2 der zumindest einen weiteren Schicht S2 hat vorzugsweise einen Durchlässigkeitskoeffizienten für Sauerstoff und Stickstoff von maximal 10⁻¹⁷ mol m⁻¹Pa⁻¹s⁻¹. Vorzugsweise besteht die Schicht S1 aus wasserdampfdiffusionshemmendem Material M1 aus Polyethylen und die zumindest eine Schicht S2 aus sauerstoff- und stickstoffdiffusionshemmendem Material M2 aus Polyamid. Die Dicke d1 der zumindest einen Schicht S1 aus wasserdampfdiffusionshemmendem Material M1 und die Dicke d2 der zumindest einen Schicht S2 aus sauerstoff- und stickstoffdiffusionshemmendem Material M2 liegt vorzugsweise im Bereich zwischen 0,05 mm und 2 mm. Der erfindungsgemäße Schutzgasschlauch 1 weist optimale Diffusionseigenschaften gegenüber Wasserdampf, Sauerstoff und Stickstoff auf, wodurch seltener Spülungen des Schutzgasschlauchs 1 erforderlich sind. Ein derartiger mindestens zweischichtiger Schutzgasschlauch 1 ist auch relativ leicht herstellbar, insbesondere im Extrusionsverfahren, und weist auch hohe Flexibilität und niedriges Gewicht auf.

Die zweite Ausführungsform eines erfindungsgemäßen Schutzgasschlauchs 1 im Querschnitt gemäß Fig. 3 unterscheidet sich vom Schutzgasschlauch 1 gemäß Fig. 2 durch eine zusätzliche vorzugsweise innen angeordnete dritte Schicht S3 aus einem dritten Material M3. Beispielsweise kann das dritte Material M3 der dritten Schicht S3 aus Ethylen-Vinylalkohol-Copolymer bestehen und eine Dicke d3 zwischen 0,05 mm und 0,5 mm aufweisen.

In Fig. 4 ist eine weitere Ausführungsform eines erfindungsgemäßen Schutzgasschlauchs 1 im Querschnitt dargestellt, wobei zwischen der zumindest einen Schicht S1 aus wasserdampfdiffusionshemmendem Material M1 und der zumindest einen Schicht S2 aus sauerstoff- und stickstoffdiffusionshemmendem Material M2 ein Gewebe V zur Verstärkung angeordnet ist. Das Gewebe V kann beispielsweise aus Nylon hergestellt sein. Ein solches Gewebe V kann auch in einer der Schichten S1, S2 des Schutzgasschlauchs 1 integriert bzw. eingelegt sein. Durch solche Gewebe V kann die Festigkeit des Schutzgasschlauches 1 erhöht werden ohne die Dicken d1, d2 der Schichten S1, S2 zu groß wählen zu müssen. Auch kann der Schutzgasschlauch 1 durch derartige Schichten aus einem entsprechenden Gewebe V bezüglich der notwendigen Glühdrahtprüfung verbessert werden.

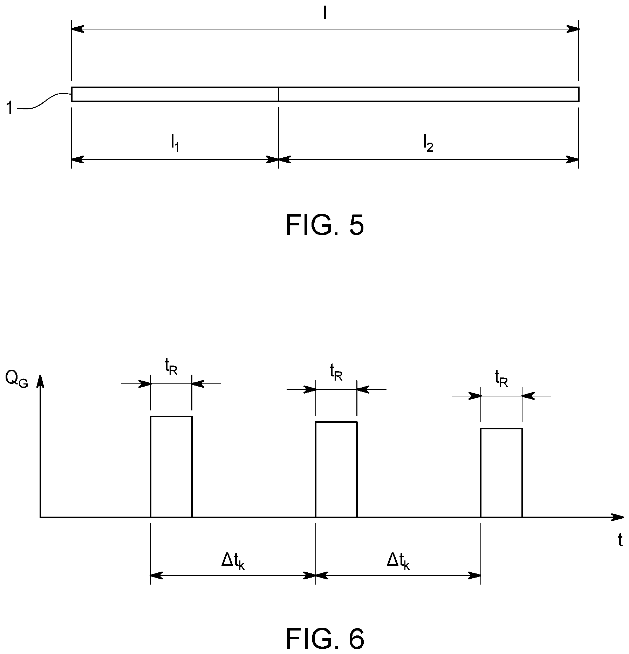

Fig. 5 zeigt eine schematische Ansicht auf einen Schutzgasschlauch 1 zur Führung eines Schutzgases G während eines Schweißprozesses. Der Schutzgasschlauch 1 weist eine Gesamtlänge l auf, welche aus zumindest zwei Teillängen l1, l2 bestehen kann. Entlang der ersten Teillänge l1 kann der Schutzgasschlauch 1 anders aufgebaut sein, als entlang der Teillänge l2. Beispielsweise kann der Schutzgasschlauch 1 entlang der Teillänge l1 eine Schicht S1 aus wasserdampfdiffusionshemmendem Material M1 außen und eine Schicht S2 aus sauerstoff- und stickstoffdiffusionshemmendem Material M2 innen aufweisen und entlang der zweiten Teillänge l2 eine Schicht S1 aus wasserdampfdiffusionshemmendem Material M1 innen und eine Schicht S2 aus sauerstoffund stickstoffdiffusionshemmendem Material M2 außen.

Fig. 6 zeigt den Verlauf von Spülungen Q_{G} des Schutzgasschlauchs 1 in Abhängigkeit der Zeit t. Demnach wird in bestimmten Zeitintervallen Δtₖ Schutzgas G während einer bestimmten Zeitdauer t_{R} durch den Schutzgasschlauch 1 geströmt, um Wasserdampf, Sauerstoff oder Stickstoff, welcher durch den Schutzgasschlauch 1 eindiffundiert ist, auszuschwemmen. Die bestimmten Zeitintervalle Δtₖ können ebenso wie die Zeitdauern t_{R} variieren und an die jeweiligen Gegebenheiten angepasst werden. Je schneller Wasserdampf, Sauerstoff oder Stickstoff durch und bzw. oder in den Schutzgasschlauch 1 eindiffundiert, desto häufiger muss gespült werden. Die Zeitdauer t_{R} der Spülung hängt im Wesentlichen vom zu verdrängenden Volumen und vom Spüldurchfluss ab. Darüber hinaus hängt das Zeitintervall Δtₖ zwischen zwei Spülungen von den geometrischen und materialspezifischen Charakteristika, wie beispielsweise Innendurchmesser, Wandstärke, Schlauchlänge und Diffusionskoeffizienten des Schutzgasschlauchs 1 ab. Ziel ist es, nur so oft zu spülen, wie es für den Erhalt einer hohen Schweißqualität wirklich notwendig ist. Dadurch kann Zeit und Schutzgas G gespart werden.

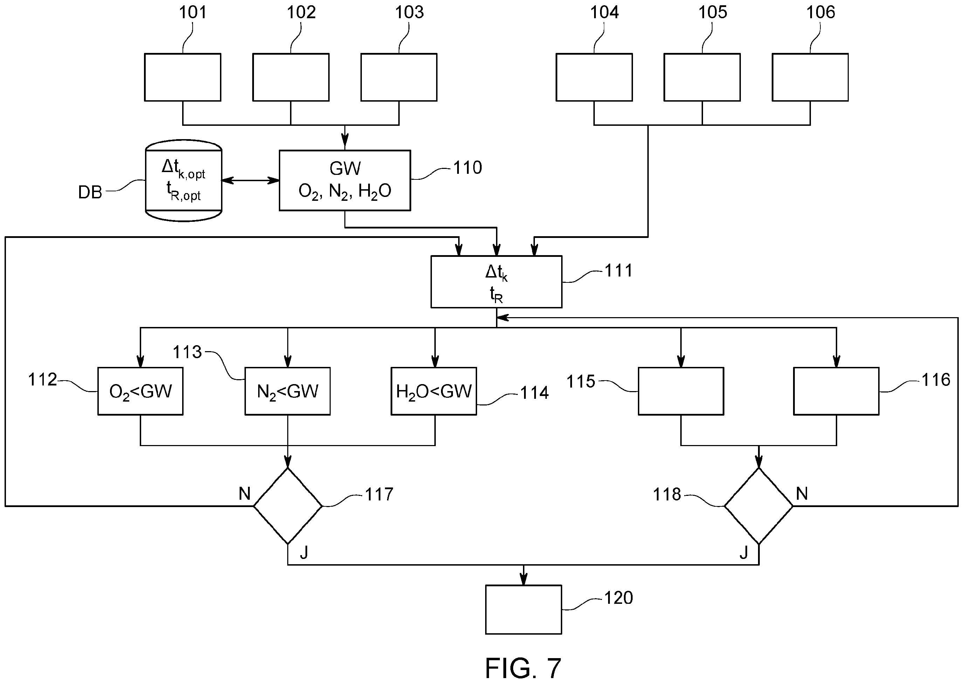

Fig. 7 zeigt ein Flussdiagramm zur Ermittlung eines Algorithmus zur Bestimmung der Parameter der Spülung für ein erfindungsgemäßes Verfahren zum Spülen eines Schutzgasschlauchs 1. Zunächst werden Daten eingegeben, welche den durchzuführenden Schweißprozess charakterisieren. Beispielsweise kann ein Wert für die gewünschte Schweißqualität (Block 101), die Form der Schweißnaht (Block 102) oder das verschweißte Material (Block 103) eingegeben oder ausgewählt werden. Auf der anderen Seite werden Daten, welche den Schutzgasschlauch charakterisieren, eingegeben oder ausgewählt. Darunter fällt beispielsweise der Aufbau des Schutzgasschlauchs (Block 104), die Materialien M1, M2 der Schichten S1, S2 des Schutzgasschlauchs 1 (Block 105) und die Länge l des Schutzgasschlauchs (Block 106). Aus den Daten, welche den Schweißprozess charakterisieren, werden Grenzwerte GW für die Diffusion des Wasserdampfs H₂O, des Sauerstoffs O₂ und des Stickstoffs N₂ ermittelt (Block 110) und daraus das Zeitintervall Δtₖ zwischen zwei Spülungen und die Zeitdauer t_{R} der Spülung in Abhängigkeit des verwendeten Schutzgasschlauchs 1 aus einer Datenbank DB ausgewählt. Demgemäß werden die für die Spülung zu verwendenden Zeitintervalle Δtₖ und Zeitdauern t_{R} aus optimalen Zeitintervallen Δt_{k,opt} und optimalen Zeitdauern t_{R,opt} aus der Datenbank DB ausgewählt. Danach wird mit den bestimmten Parametern für das Zeitintervall Δtₖ und die Zeitdauer t_{R} eine Spülung (Block 111) durchgeführt. Gemäß den Verfahrensschritten 112 bis 114 werden die Grenzwerte GW für die Diffusion des Wasserdampfs H₂O, des Sauerstoffs O₂ und des Stickstoffs N₂ überprüft. Gemäß Abfrage 117 wird entweder erneut gespült (Block 111) oder das Verfahren beendet (Block 120). Alternativ kann auch manuell gespült werden (Block 115) bzw. der Schweißprozess durchgeführt werden (Block 116). Nach der Abfrage 118 wird das Verfahren entweder fortgesetzt oder beendet (Block 120).

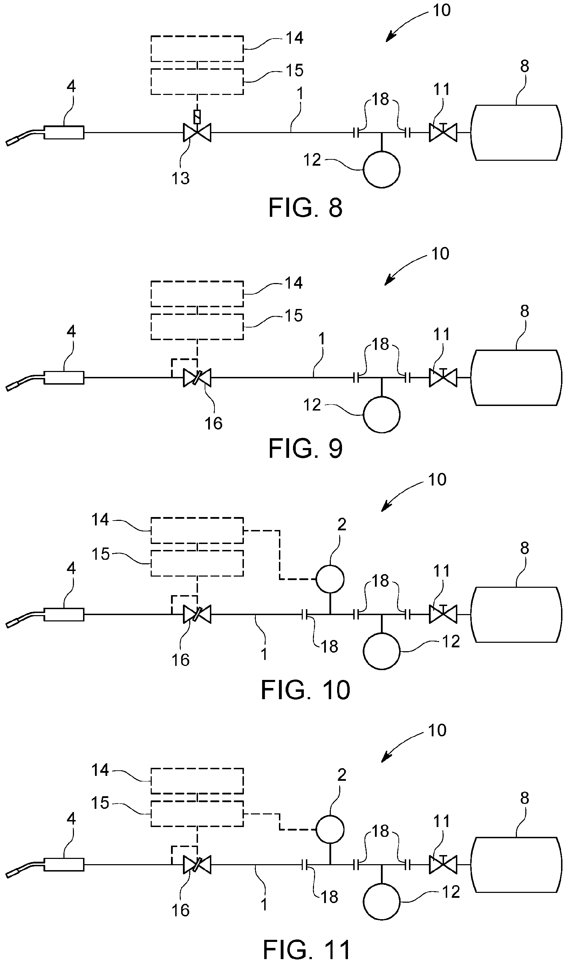

Fig. 8 zeigt eine erste Ausführungsform einer Schweißvorrichtung 10 zur Erzielung einer energieautarken Spülung des Schutzgasschlauchs 1. Wie bei Fig. 1 ist der Schweißbrenner 4 über den Schutzgasschlauch 1 mit dem Gasspeicher 8 verbunden, wobei entlang des Schutzgasschlauchs 1 mehrere lösbare und nichtlösbare Schlauchkupplungen 18 angeordnet sein können. Im Fall einer Strom- und Gasabschaltung bzw. einer Abschaltung der Schweißzelle beispielsweise über die Nacht oder das Wochenende wird üblicherweise ein zwischen dem Gasspeicher 8 und dem Schutzgasschlauch 1 angeordnetes Absperrventil 11 geschlossen und die Stromversorgung der Schweißvorrichtung 10 unterbrochen. Um auch während eines geschlossenes Absperrventils 11 und während einer Unterbrechung der Stromversorgung der Schweißvorrichtung 10 eine regelmäßige Spülung des Schutzgasschlauchs 1 sicherstellen zu können, ist ein Zwischengasspeicher 12 vorgesehen, der eine gewisse Menge an Schutzgas G speichern kann, welches auch bei abgesperrtem Gasspeicher 8 zur Verfügung steht. Im dargestellten Ausführungsbeispiel ist der Zwischengasspeicher 12 über zwei Schlauchkupplungen 18 am Schutzgasschlauch 1 angeschlossen. Der Zwischengasspeicher kann beispielsweise durch einen Druckbehälter, wie einen Windkessel, gebildet sein, der kleiner ist, als der Gasspeicher 8. Über eine energieautarke Steuerung 15, welche mit der Schweißsteuerung 14 verbunden sein kann, kann auch im Falle einer Stromabschaltung eine autonome Steuerung eines Gasmagnetventils 13 im Schutzgasschlauch eigenständig durchgeführt werden. Auf diese Weise kann mit der energieautarken Steuerung 15 und dem Zwischengasspeicher 12 eine regelmäßige Spülung des Schutzgasschlauchs 1 über eine gewisse Zeit von beispielsweise mehreren Tagen sichergestellt werden. Die begrenzte Speicherkapazität des Zwischengasspeichers 12 ist vorzugsweise in der energieautarken Steuerung 15 hinterlegt. Ferner ist es möglich, die energieautarke Steuerung 15 auf eine gewisse Zeitdauer, beispielsweise Tage, Wochen, Monate zu beschränken.

Fig. 9 zeigt eine zweite Ausführungsform einer Schweißvorrichtung 10 zur Erzielung einer energieautarken Spülung des Schutzgasschlauchs 1, wobei im Gegensatz zur ersten Ausführungsform gemäß Fig. 8 ein Regelventil 16 anstelle des Magnetventils 13 im Schutzgasschlauch 1 angeordnet ist, welches von der energieautarken Steuerung 15 entsprechend angesteuert bzw. geregelt wird und eine temporäre Spülung des Schutzgasschlauchs 1 mit Schutzgas G vom Zwischengasspeicher 12 sicherstellt.

Fig. 10 zeigt eine dritte Ausführungsform einer Schweißvorrichtung 10 zur Erzielung einer energieautarken Spülung des Schutzgasschlauchs 1, wobei mit der Schweißsteuerung 14 ein Strömungssensor 2 verbunden ist, der den Durchfluss des Schutzgases G im Schutzgasschlauch 1 erfasst. Mit Hilfe des Strömungssensors 2 können Aussagen über die Dichtheit des Schutzgasschlauchs 1 und der Schlauchkupplungen 18 und anderer Elemente, wie zum Beispiel Rohre oder Ventile getätigt werden. Liegt die mit dem Strömungssensor 2 erfasste Dichtheit unter einem festgelegten Grenzwert, so kann beispielsweise aus sicherheitstechnischen Aspekten ein Signal ausgegeben werden und/oder eine Zwangsabschaltung der Schweißvorrichtung 10 durchgeführt werden.

Fig. 11 zeigt eine vierte Ausführungsform einer Schweißvorrichtung 10 zur Erzielung einer energieautarken Spülung des Schutzgasschlauchs 1, wobei der Strömungssensor 2 im Gegensatz zur dritten Ausführungsvariante gemäß Fig. 10 mit der energieautarken Steuerung 15 verbunden ist.

Durch die in den Figuren 8 bis 11 dargestellten Ausführungsvarianten von Schweißvorrichtungen 10 kann auch während Nachtstunden oder während eines Wochenendes, wenn die Versorgung mit Schutzgas G und elektrischer Energie nicht gewährleistet ist, eine regelmäßige Spülung des Schutzgasschlauchs 1 mit Schutzgas G ermöglicht werden. Dadurch kann zu Beginn der Schweißtätigkeit beispielsweise am Morgen eines Werktags Zeit und Schutzgas G zur Spülung des Schutzgasschlauchs 1 gespart werden. Durch die regelmäßige Spülung des Schutzgasschlauchs 1 wird eine Speicherung und/oder Anreicherung (bis hin zu einer Sättigung) von Wasserdampf H₂O im Schlauchmaterial verhindert. Da es zu keiner Wasserdampfanreicherung im Schlauchmaterial kommt, kann das Schutzgas auch nicht durch im Schlauchmaterial angereicherten Wasserdampf verunreinigt werden. Ebenso wird durch die regelmäßige Spülung eine Anreicherung des Schutzgases im Schutzgasschlauch mit Stickstoff N₂ und Sauerstoff O₂ verhindert. Somit wird eine hohe Schweißqualität beim nachfolgenden Schweißprozess gewährleistet.

## Patentansprüche

1. Schutzgasschlauch (1) zur Führung eines Schutzgases (G) für einen Schweißprozess, mit zumindest zwei in radialer Richtung aufeinanderfolgenden Schichten (S1, S2) aus verschiedenen Materialien (M1, M2), **dadurch gekennzeichnet, dass** zumindest eine Schicht (S1) aus einem wasserdampfdiffusionshemmenden Material (M1) und zumindest eine weitere Schicht (S2) aus einem sauerstoff- und stickstoffdiffusionshemmenden Material (M2) besteht.

2. Schutzgasschlauch (1) nach Anspruch 1, **dadurch gekennzeichnet, dass** das wasserdampfdiffusionshemmende Material (M1) der zumindest einen Schicht (S1) einen Durchlässigkeitskoeffizienten von maximal 10⁻¹³ mol m⁻¹Pa⁻¹s⁻¹ aufweist.

3. Schutzgasschlauch (1) nach Anspruch 1 oder 2, **dadurch gekennzeichnet, dass** das sauerstoff- und stickstoffdiffusionshemmende Material (M2) der zumindest einen Schicht (S2) einen Durchlässigkeitskoeffizienten von maximal 10⁻¹⁷ mol m⁻¹Pa⁻¹s⁻¹ aufweist.

4. Schutzgasschlauch (1) nach einem der Ansprüche 1 bis 3, **dadurch gekennzeichnet, dass** die zumindest eine Schicht (S1) aus wasserdampfdiffusionshemmendem Material (M1) aus Polyethylen (PE), Polypropylen (PP), Ethylen-Vinylalkohol-Copolymer (EVOH), Polyvinylidenchlorid (PVDC), Polyvinylidenfluorid (PVDF) oder Polytetrafluorethylen (PTFE) besteht.

5. Schutzgasschlauch (1) nach einem der Ansprüche 1 bis 4, **dadurch gekennzeichnet, dass** die zumindest eine Schicht (S2) aus sauerstoff- und stickstoffdiffusionshemmendem Material (M2) aus Polyamid (PA), Polyvinylidenchlorid (PVDC) oder Ethylen-Vinylalkohol-Copolymer (EVOH) besteht.

6. Schutzgasschlauch (1) nach einem der Ansprüche 1 bis 5, **dadurch gekennzeichnet, dass** die Dicke (d1) der zumindest einen Schicht (S1) aus wasserdampfdiffusionshemmendem Material (M1) und die Dicke (d2) der zumindest einen Schicht (S2) aus sauerstoff- und stickstoffdiffusionshemmendem Material (M2) zwischen 0,05 mm und 2 mm beträgt.

7. Schutzgasschlauch (1) nach einem der Ansprüche 1 bis 6, **dadurch gekennzeichnet, dass** vorzugsweise innen zumindest eine dritte Schicht (S3) aus einem dritten Material (M3), vorzugsweise aus Ethylen-Vinylalkohol-Copolymer (EVOH) oder Polyvinylidenchlorid (PVDC) und vorzugsweise mit einer Dicke (d3) zwischen 0,05 mm und 0,5 mm, angeordnet ist.

8. Schutzgasschlauch (1) nach einem der Ansprüche 1 bis 7, **dadurch gekennzeichnet, dass** die zumindest eine Schicht (S1) aus wasserdampfdiffusionshemmendem Material (M1) und bzw. oder die zumindest eine Schicht (S2) aus sauerstoff- und stickstoffdiffusionshemmendem Material (M2) verstärkt ist, beispielsweise mit einem Gewebe (V) aus Nylon oder dgl.

9. Schutzgasschlauch (1) nach einem der Ansprüche 1 bis 8, **dadurch gekennzeichnet, dass** die zumindest eine Schicht (S1) aus wasserdampfdiffusionshemmendem Material (M1) innen und die zumindest eine Schicht (S2) aus sauerstoff- und stickstoffdiffusionshemmendem Material (M2) außen angeordnet ist.

10. Schutzgasschlauch (1) nach einem der Ansprüche 1 bis 9, **dadurch gekennzeichnet, dass** ein Strömungssensor (2) zur Bestimmung der Strömung des Schutzgases (G) vorgesehen ist.

11. Verfahren zum Spülen eines Schutzgasschlauchs (1) nach einem der Ansprüche 1 bis 10, wobei in bestimmten Zeitintervallen (Δtₖ) Schutzgas (G) während einer bestimmten Zeitdauer (t_{R}) durch den Schutzgasschlauch (1) geströmt wird, **dadurch gekennzeichnet, dass** das Zeitintervall (Δtₖ) zwischen zwei Spülungen und die Zeitdauer (t_{R}) der Spülung in Abhängigkeit der Zusammensetzung der zumindest einen Schicht (S1) aus wasserdampfdiffusionshemmendem Material (M1) und der zumindest einen Schicht (S2) aus sauerstoff- und stickstoffdiffusionshemmendem Material (M2) des Schutzgasschlauchs (1) bestimmt werden.

12. Verfahren nach Anspruch 11, **dadurch gekennzeichnet, dass** das Zeitintervall (Δtₖ) zwischen zwei Spülungen und die Zeitdauer (t_{R}) der Spülung mit einem Algorithmus aus der Zusammensetzung der zumindest einen Schicht (S1) aus wasserdampfdiffusionshemmendem Material (M1) und der zumindest einen Schicht (S2) aus sauerstoff- und stickstoffdiffusionshemmendem Material (M2) des Schutzgasschlauchs (1) berechnet werden.

13. Verfahren nach Anspruch 11, **dadurch gekennzeichnet, dass** das Zeitintervall (Δtₖ) zwischen zwei Spülungen und die Zeitdauer (t_{R}) der Spülung aus optimalen Zeitintervallen (Δtk,opt) und optimalen Zeitdauern (t_{R,opt}) in Abhängigkeit der Zusammensetzung der zumindest einen Schicht (S1) aus wasserdampfdiffusionshemmendem Material (M1) und der zumindest einen Schicht (S2) aus sauerstoff- und stickstoffdiffusionshemmendem Material (M2) des Schutzgasschlauchs (1) aus einer Datenbank (DB) ausgewählt werden.

14. Verfahren nach einem der Ansprüche 11 bis 13, **dadurch gekennzeichnet, dass** bei der Bestimmung des Zeitintervalls (Δtₖ) zwischen zwei Spülungen und der Zeitdauer (t_{R}) der Spülung weitere eingegebene Daten des Schweißprozesses berücksichtigt werden.

15. Verfahren nach einem der Ansprüche 11 bis 14, **dadurch gekennzeichnet, dass** bei der Bestimmung des Zeitintervalls (Δtₖ) zwischen zwei Spülungen und der Zeitdauer (t_{R}) der Spülung die Menge des Schutzgases (G) berücksichtigt wird.
